# EUROPÄISCHE PATENTSCHRIFT

(11) **EP 1 332 817 B1**
(45) Veröffentlichungstag und Bekanntmachung des Hinweises auf die Patenterteilung: **01.09.2004**
(21) Anmeldenummer: 03002335.2
(22) Anmeldetag: 03.02.2003
(51) Int. Cl.: B23B 31/14, B23B 31/16

(54) **Spannfutter**
Chuck
Mandrin de serrage

(30) Priorität: 04.02.2002 DE 10204574
(43) Veröffentlichungstag der Anmeldung: 06.08.2003
(73) Patentinhaber: Schunk GmbH & Co. KG Fabrik für Spann- und Greifwerkzeuge, 74348 Lauffen (DE)
(72) Erfinder: Gross, Johann, 74081 Heilbronn (DE)
(74) Vertreter: Paul, Dieter-Alfred, Dipl.-Ing.

(56) Entgegenhaltungen:
- FR-A- 2 144 211
- US-A- 2 828 134
- US-A- 2 982 558
- US-A- 4 213 621
- US-A- 5 842 703
- US-A1- 2001 050 466

## Beschreibung

Die vorliegende Erfindung betrifft ein Spannfutter gemäß dem Oberbegriff des Anspruchs 1. Ein solches Spannfutter ist aus der US-A-5 842 703 bekannt.

Spannfutter dieser Art sind bekannt und werden in der Praxis in vielfältiger Weise zum Einspannen und Bearbeiten von Werkstücken benötigt und eingesetzt. Die herkömmlichen Spannfutter sind üblicherweise als sogenannte Dreibackenfutter ausgebildet und bestehen aus einem formsteifen Futterkörper, der eine zentrale Aufnahme für die Werkstücke aufweist, sowie aus mehreren Spannbacken, die in radialen Führungsnuten des Futterkörpers angeordnet sind und durch einen Antrieb gemeinsam verstellt werden können.

Ein Problem, dass bei den herkömmlichen Spannfuttern häufig auftritt, besteht darin, daß mit zunehmender Drehzahl hohe Fliehkräfte auftreten, die dazu führen, daß die an sich vorgespannten Spannbacken nach außen gezogen werden und es somit zu einer Verringerung der Spannkraft kommt.

Zur Verminderung solcher Spannkraftverluste sind unterschiedliche Lösungen bekannt.

Bei einem aus der DE 38 22 506 C1 bekannten Spannfutter erfolgt ein Fliehkraftausgleich beispielsweise über Fliehkraftausgleichsgewichte, die jeweils unterhalb einer zugehörigen Spannbacke im Futterkörper verstellbar angeordnet und mit der Spannbacke über einen Hebel, der sich im Futterkörper schwenkbeweglich abstützt und an seinem einen Ende in einer Führungsausnehmung des Ausgleichsgewichts und mit seinem zweiten Ende in einer Führungsausnehmung der Spannbacke ruht, verbunden ist. Beim Auftreten von Fliehkräften wird das Ausgleichsgewicht im Futterkörper nach außen gezogen und überträgt über den Hebel gleichzeitig eine der Fliehkraft des Ausgleichsgewichts entgegenwirkende Kraft auf die Spannbacke, welche demzufolge nachgespannt wird.

Diese Art des Fliehkraftausgleichs hat sich in der Praxis zwar durchaus bewährt, als nachteilig wird jedoch angesehen, daß die Konstruktion sehr komplex ist und zu einer erheblichen Bauhöhe des Spannfutters führt.

Aufgabe der Erfindung ist es daher, ein Spannfutter mit Fliehkraftausgleich zu schaffen, das einfach im Aufbau ist.

Diese Aufgabe ist durch die Merkmale des Anspruchs 1 gelöst.

Vorteilhafte Ausgestaltungen des erfindungsgemäßen Spannfutters sind in den Unteransprüchen beschrieben.

Der Erfindung liegt damit die Überlegung zugrunde, die Spannbacken durch Einleitung entsprechender Dreh- oder Biegemomente in die Aufnahmeelemente des Futterkörpers nachzuspannen. Hierzu sind an den Aufnahmeelementen die Fliehkraftausgleichsgewichte vorgesehen, die maschinenseitig über die zwischen den Aufnahmeelementen und dem Grundkörper gebildeten Kontaktbereiche vorstehen, wodurch Hebel gebildet werden, um die während des Betriebs auf die Ausgleichsgewichte wirkende Fliehkräfte in Dreh- bzw. Biegemomente umzusetzen, die in die Aufnahmeelemente eingeleitet werden und so gerichtet sind, daß die Spannbakken gegen das gespannte Werkstück gedrückt werden.

Dadurch, daß gemäß der vorliegenden Erfindung der Fliehkraftausgleich über die Aufnahmeelemente des Futterkörpers und die damit verbundenen Ausgleichsgewichte erfolgt, ist eine kinematische Umsetzung über Hebel oder dergleichen, wie sie im Stand der Technik vorgesehen ist, nicht erforderlich. Das erfindungsgemäße Spannfutter ist daher vergleichsweise einfach im Aufbau und erfordert insbesondere wenige Bauteile.

Im übrigen haben Versuche gezeigt, daß die Spannkraftverluste bei dem erfindungsgemäßen Spannfutter sehr gering sind und sich bei einer geeigneten Auslegung der Fliehkraftausgleichsgewichte die Spannkräfte durch die eingeleiteten Drehmomente im Betrieb sogar erhöhen lassen. Dies bringt den Vorteil mit sich, daß nur geringe Spannkräfte realisiert zu werden brauchen, wenn ein Werkstück bei Maschinenstillstand gespannt wird. Im Extremfall kann es sogar ausreichend sein, die Spannbacken mit dem zu spannenden Werkstück nur in Kontakt zu bringen, weil die eigentlichen Spannkräfte dann über die im Betrieb vorhandenen Fliehkraftmomente erzeugt werden. Im Ergebnis führt dies dazu, daß die Komponenten des erfindungsgemäßen Spannfutters leichter gebaut werden können und der Verschleiß an den Führungsnuten gering ist.

Es gibt verschiedene Möglichkeiten, die in die Aufnahmeelemente über die Fliehkraftausgleichsgewichte eingeleiteten Dreh- oder Biegemomente in eine Spannbewegung der Spannbacken umzusetzen.

Gemäß einer ersten Variante der vorliegenden Erfindung ist vorgesehen, daß die Aufnahmeelemente gegenüber dem Grundkörper in einer die Futterachse und die Längsachse der zugehörigen Führungsnut einschließenden Ebene schwenkbar sind, so daß das über die Fliehkraftausgleichsgewichte im Betrieb eingeleitete Dreh- oder Biegemoment in eine entsprechende Schwenkbewegung der Aufnahmeelemente umgesetzt wird. Konstruktiv können die Aufnahmeelemente und der Grundkörper hierzu in den Kontaktbereichen über feste Gelenke beispielsweise in Form von Gelenkbolzen und entsprechenden Aufnahmen miteinander verbunden sein. Alternativ können die Gelenke auch durch korrespondierende Kontaktflächen (beispielsweise kreisabschnittförmig) an den Aufnahmeelementen und dem Grundkörper gebildet sein. Ebenfalls ist es möglich, daß die Aufnahmeelemente und der Grundkörper in den Kontaktbereichen unter Bildung von Festkörpergelenken fest miteinander verbunden sind.

Gemäß einer zweiten Variante der Erfindung ist vorgesehen, daß die Aufnahmeelemente an ihrem radial inneren Endbereich flächig an dem Grundkörper anliegen und sich axial abstützen. Beispielsweise können sie in einer zur Futterachse senkrechten Ebene am Grundkörper anliegen. Bei dieser Ausführungsform können die Aufnahmeelemente gegenüber dem Grundkörper nicht wie bei einer gelenkigen Verbindung schwenken. Vielmehr werden sie durch die im Betrieb über die Fliehkraftausgleichsgewichte eingeleiteten Drehmomente elastisch gebogen und auf diese Weise die in den Führungsnuten gehaltenen Spannbacken gegen das gespannte Werkstück gedrückt. Zweckmäßigerweise sind bei dieser Ausführungsform speziell ausgebildete Biegebereiche zwischen den Kontaktbereichen einerseits und den radial außerhalb davon vorgesehenen Fliehkraftausgleichsgewichten andererseits vorgesehen, die der Biegung ein geringes Widerstandsmoment entgegensetzen.

Die größte Wirkung wird erreicht, wenn die Fliehkraftausgleichsgewichte am radial äußeren Bereich der Aufnahmeelemente und die Kontaktbereiche möglichst weit radial innen vorgesehen sind. Insbesondere können die Fliehkraftausgleichsgewichte um den Grundkörper herum vorgesehen sein, wobei sie dann zweckmäßiger Weise in Anpassung an dessen üblicherweise zylinderische Form ebenfalls zylinderabschnittförmig ausgebildet sind.

In weiterer vorteilhafter Ausbildung der Erfindung können am maschinenseitigen Endbereich der Fliehkraftausgleichsgewichte und dem Grundkörper zueinander korrespondierende Anschlagflächen ausgebildet sind, um den Verstellweg der Fliehkraftausgleichsgewichte radial nach außen hin zu begrenzen. Zum einen wird durch diese Ausführungsform das maximal von den Fliehkraftausgleichsgewichten auf die Aufnahmeelemente wirkende Drehmoment bestimmt. Des weiteren stellt diese Maßnahme auch einen Unfallschutz dar, da sich die Fliehkraftausgleichsgewichte bei Materialbrüchen oder dergleichen nicht ohne weiteres vom Futterkörper lösen können.

Nach einer bevorzugten Ausführungsform der Erfindung ist vorgesehen, daß die Fliehkraftausgleichsgewichte fest mit den Aufnahmeelementen verbunden sind. Beispielsweise können sie einteilig durch ein Gußverfahren hergestellt sein, wodurch sich die Herstellung einfach gestaltet. Alternativ besteht die Möglichkeit, die Fliehkraftausgleichsgewichte axial verstellbar und/oder auswechselbar an den Aufnahmeelementen vorzusehen, um durch Veränderung des wirksamen Hebels bzw. des Gewichts die Größe des Biegemoments, welches über die Fliehkraftausgleichsgewichte in die Aufnahmeelemente eingeleitet wird, zu beeinflussen.

Die Aufnahmeelemente können als separate Bauteile ausgebildet sein. Alternativ ist es möglich, daß die Aufnahmeelemente unter Bildung eines Aufnahmekörpers über elastische Zwischenbereiche fest miteinander verbunden sind. Auch können die Aufnahmeelemente in eine elastische Halterung aus insbesondere einem Kunststoffmaterial eingesetzt bzw. eingebettet und auf diese Weise miteinander zu einem Aufnahmekörper verbunden sein.

Hinsichtlich weiterer vorteilhafter Ausgestaltungen der Erfindung wird auf die nachfolgende Beschreibung eines Ausführungsbeispiels unter Bezugnahme auf die beiliegende Zeichnung verwiesen. In der Zeichnung zeigt:

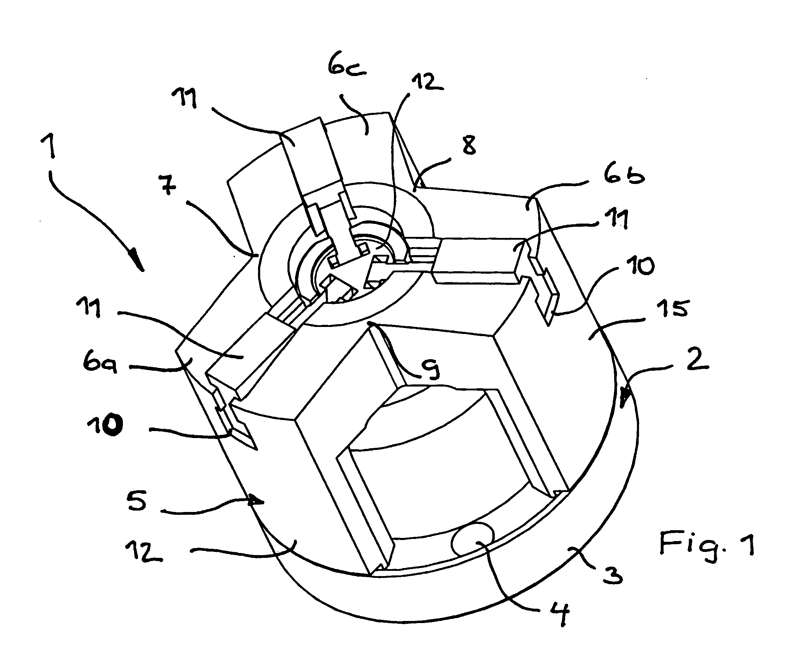

- Figur 1: ein Spannfutter gemäß der vorliegenden Erfindung in perspektivischer Darstellung,

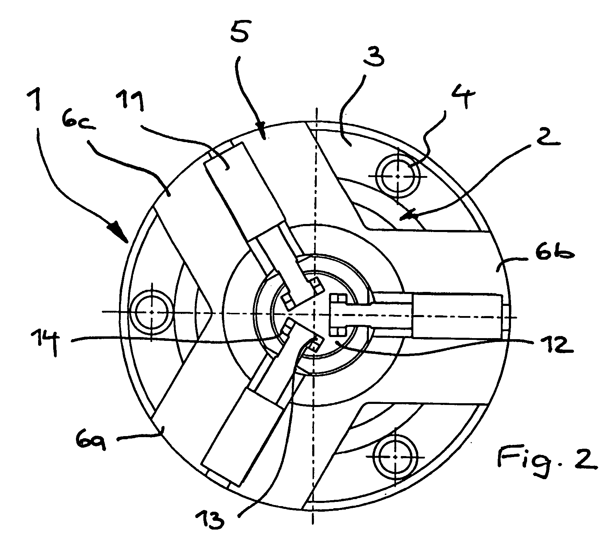

- Figur 2: das Spannfutter aus Figur 1 in Draufsicht und
- Figur 3: das Spannfutter aus Figur 2 im Schnitt.

In der Zeichnung ist ein Spannfutter gemäß der vorliegenden Erfindung dargestellt, das beispielsweise zum Spannen von Werkstücken an Drehmaschinen eingesetzt werden kann. Zu dem Spannfutter, das als Kraftspannfutter ausgebildet ist, gehört ein Futterkörper 1, der eine zylindrische Grundform besitzt.

Der Futterkörper 1 ist mehrteilig ausgebildet und umfaßt einen Grundkörper 2, der über einen Befestigungsflansch 3 an einer nicht dargestellten Spindel beispielsweise einer Drehmaschine befestigt werden kann. Hierzu sind in dem Befestigungsflansch 3 drei Durchgangsbohrungen 4 für entsprechende Befestigungsschrauben ausgebildet. Zu dem Futterkörper 1 gehört weiterhin ein Aufnahmekörper 5, der auf den Grundkörper 2 von dessen Werkstückseite her aufgesetzt ist. Der Aufnahmekörper 5 wird von drei Aufnahmeelementen 6a, 6b, 6c gebildet, die mit einem Versatz von 120° zueinander angeordnet und in den dazwischenliegenden Übergangsbereichen 7, 8, 9 derart elastisch miteinander verbunden sind, daß die Aufnahmeelemente 6a, 6b, 6c relativ zueinander bewegt werden können. Alternativ ist es auch möglich, die Aufnahmeelemente 6a, 6b, 6c als voneinander getrennte Bauteile vorzusehen. Eine körperliche Verbindung zu einem geschlossenen Aufnahmekörper 5, wie er in der dargestellten Ausführungsform vorhanden ist, ist nicht unbedingt erforderlich.

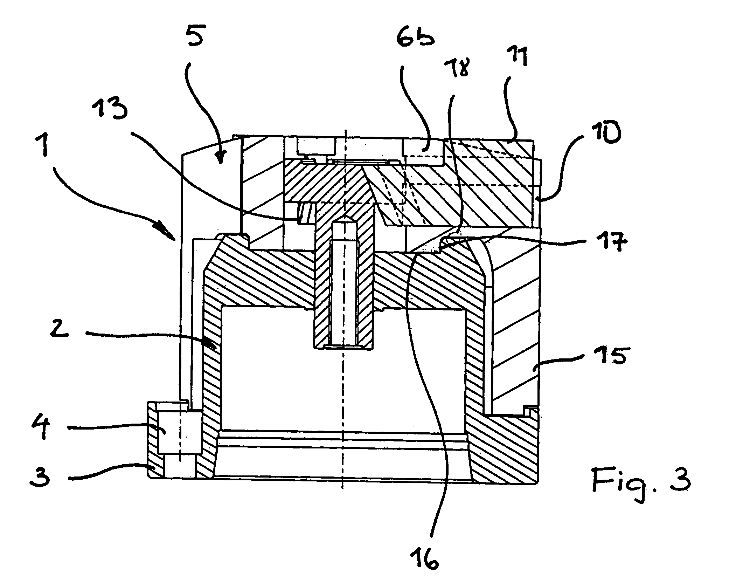

Wie in der Figur 3 erkennbar ist, liegen die Aufnahmeelemente 6a, 6b, 6c mit einem Innenbund 16 flächig an der Stirnseite des Grundkörpers 2 an und stützen sich radial nach außen hin unter Bildung von Kontaktbereichen 17 an einer Schulter des Grundkörpers 2 ab.

In den vom Grundkörper 2 wegweisenden Stirnseiten der Aufnahmeelemente 6a, 6b, 6c sind radiale Führungsnuten 10 vorgesehen, die etwa mittig von den Aufnahmeelementen 6a, 6b, 6c verlaufen. In die Führungsnuten 10 sind Spannbakken eingesetzt, die jeweils aus einer Grundbacke 11 und einer daran aufschraubbaren Aufsatzbacke bestehen, wobei in der Zeichnung nur die Grundbacke 11 dargestellt ist.

Die radiale Verstellung der Spannbacken erfolgt durch einen Spannkolben 12, der in einer Bohrung des Futterkörpers 1 axial verschiebbar angeordnet und beispielsweise durch hydraulische oder mechanische Antriebsmittel betätigbar ist. Der Spannkolben 12 ist mit den Grundbacken 11 über eine Keilhakenkupplung verbunden, wie sie an sich bekannt ist. Hierzu sind an den radial nach innen weisenden Enden der Grundbacken 11 jeweils T-förmige Keilhaken 13 ausgebildet, die in entsprechende T-förmige Keilnuten 14 des Spannkolbens 12 eingreifen. Die Keilhaken 13 und Keilnuten 14 weisen, wie in Figur 3 angedeutet ist, Keilflächen auf, die im spitzen Winkel zur Futterachse liegen und in der Weise miteinander zusammenwirken, daß eine Axialverstellung des Spannkolbens 12 in eine synchrone Radialbewegung der Grundbacken 11 umgesetzt wird. Wenn der Spannkolben 12 zum Spannen eines Werkstücks zurückgezogen wird, werden die Aufnahmeelemente 6a, 6b, 6c die Betätigungskräfte gegen den Grundkörper 2 gezogen und so daran fixiert. Eine Fixierung über Schrauben oder dergleichen ist auch möglich.

Um die bei hohen Drehzahlen des Spannfutters auf die Spannbacken einwirkenden Fliehkräfte und damit verbundenen Spannkraftverluste zumindest teilweise zu kompensieren, weisen die Aufnahmeelemente 6a, 6b, 6c an ihren radial außen gelegenen Endbereichen Fliehkraftausgleichsgewichte 15 auf. Die Fliehkraftausgleichsgewichte 15 ragen von den Aufnahmeelementen 6a, 6b, 6c maschinenseitig ab und erstrecken sich fast bis zum Befestigungsflansch 3 des Grundkörpers 2. Am Befestigungsflansch 3 ist dabei ein Sicherungsbund vorgesehen, der einen Radialanschlag für die freien Enden der Fliehkraftausgleichsgewichte 15 bildet, so daß deren Weg radial nach außen begrenzt ist. Es ist auch möglich, in dem Befestigungsflansch Ausnehmungen vorzusehen, in welche die Ausgleichsgewichte 15 eingreifen. Hierdurch kann Bauhöhe eingespart werden.

Insbesondere in Figur 3 ist gut erkennbar, daß die Fliehkraftausgleichsgewichte 15 zur Maschinenseite hin erheblich über die Kontaktbereiche 17, in denen die Aufnahmeelemente 6a, 6b, 6c sich radial am dem Grundkörper 2 abstützen, vorstehen, so daß auch die Schwerpunkte der Ausgleichsgewichte 15, an welchen die im Betrieb auftretenden Fliehkräfte an den Ausgleichsgewichten 15 angreifen, einen axialen Abstand von den Kontaktbereichen 17 besitzen. Über diesen Hebel werden die im Betrieb auf die Ausgleichsgewichte 15 wirkenden Fliehkräfte als Dreh- bzw. Biegemomente in die Aufnahmeelemente 6a, 6b, 6c eingeleitet, durch welche die Aufnahmeelemente 6a, 6b, 6c so verformt werden, daß die darin gehaltenen Spannbakken gegen das gespannte Werkstück nachgespannt und auf diese Weise Spannkraftverluste kompensiert werden. In der Figur 3 ist beispielhaft für das dort im Schnitt dargestellte Aufnahmeelement 6b gezeigt, daß das durch die Fliehkraft erzeugte Dreh- bzw. Biegemoment entgegen dem Uhrzeigersinn gerichtet ist, wodurch das Aufnahmeelement 6b im Bereich der Führungsnut 10 etwa um eine senkrecht zur Bildebene der Figur 3 liegende Achse gebogen wird. Um diese Biegung zu unterstützen, ist der zwischen dem radial innen gelegenen Kontaktbereich 17 und dem radial außen gelegenen Ausgleichsgewicht 15 vorhandene Zwischenbereich 18 mit einem geschwächten Querschnitt versehen, welcher der Biegung nur ein geringes Widerstandsmoment entgegensetzt.

## Patentansprüche

1. Spannfutter mit einem Futterkörper (1) und Spannbakken, die in radialen Führungsnuten des Futterkörpers (1) verstellbar angeordnet sind, wobei der Futterkörper (1) einen maschinen-seitigen Grundkörper (2) aufweist, **dadurch gekennzeichnet, daß** der Futterkörper (1) mehrere am Grundkörper (2) gehaltene Aufnahmeelemente (6a, 6b, 6c), in denen die Führungsnuten (10) für die Spannbacken (11) ausgebildet sind, aufweist, wobei sich die Aufnahmeelemente (6a, 6b, 6c) radial unter Bildung von Kontaktbereichen (17) an dem Grundkörper (2) abstützen und Fliehkraftausgleichsgewichte (15) tragen, die zur Maschinenseite hin über die Kontaktbereiche (17) vorstehen.

2. Spannfutter nach Anspruch 1, **dadurch gekennzeichnet, daß** die Aufnahmeelemente (6a, 6b, 6c) gegenüber dem Grundkörper (2) in einer die Futterachse und die Längsachse der zugehörigen Führungsnut (10) einschießenden Ebene schwenkbar sind.

3. Spannfutter nach Anspruch 2, **dadurch gekennzeichnet, daß** die Aufnahmeelemente und der Grundkörper in den Kontaktbereichen über Gelenke miteinander verbunden sind.

4. Spannfutter nach Anspruch 3, **dadurch gekennzeichnet, daß** die Gelenke durch insbesondere kreisabschnittförmige Kontaktflächen an den Aufnahmeelementen und dem Grundkörper gebildet sind.

5. Spannfutter nach einem der Ansprüche 1 bis 3, **dadurch gekennzeichnet, daß** die Aufnahmeelemente und der Grundkörper in den Kontaktbereichen unter Bildung von Festkörpergelenken fest verbunden sind.

6. Spannfutter nach Anspruch 1, **dadurch gekennzeichnet, daß** die Aufnahmeelemente (6a, 6b, 6c) an ihrem radial inneren Endbereich flächig an dem Grundkörper (2) anliegen.

7. Spannfutter nach Anspruch 6, **dadurch gekennzeichnet, daß** die Aufnahmeelemente (6a, 6b, 6c) in einer zur Futterachse senkrechten Ebene flächig am Grundkörper (2) anliegen und am Grundkörper (2) ein Radialanschlag (17) ausgebildet ist.

8. Spannfutter nach Anspruch 6 oder 7, **dadurch gekennzeichnet, daß** die Aufnahmeelemente (6a, 6b, 6c) zwischen den Kontaktbereichen (17) und den radial außerhalb von diesen vorgesehenen Fliehkraftausgleichsgewichten (15) einen Biegebereich (18) aufweisen.

9. Spannfutter nach einem der vorherigen Ansprüche, **dadurch gekennzeichnet, daß** die Fliehkraftausgleichsgewichte (15) am radial äußeren Endbereich der Aufnahmeelemente (6a, 6b, 6c) vorgesehen sind.

10. Spannfutter nach Anspruch 9, **dadurch gekennzeichnet, daß** die Fliehkraftausgleichsgewichte (15) zylinderabschnittförmig ausgebildet sind.

11. Spannfutter nach einem der vorherigen Ansprüche, **dadurch gekennzeichnet, daß** am maschinenseitigen Endbereich der Fliehkraftausgleichsgewichte (15) und dem Grundkörper (2) zueinander korrespondierende Anschlagflächen ausgebildet sind, um den verstellweg der Fliehkraftausgleichsgewichte radial nach außen hin zu begrenzen.

12. Spannfutter nach einem der vorherigen Ansprüche, **dadurch gekennzeichnet, daß** die Fliehkraftausgleichsgewichte (15) fest mit den Aufnahmeelementen (6a, 6b, 6c) verbunden sind.

13. Spannfutter nach einem der Ansprüche 1 bis 11, **dadurch gekennzeichnet, daß** die Fliehkraftausgleichsgewichte axial verstellbar an den Aufnahmeelementen vorgesehen sind.

14. Spannfutter nach einem der vorherigen Ansprüche, **dadurch gekennzeichnet, daß** die Aufnahmeelemente (6a, 6b, 6c) unter Bildung eines Aufnahmekörpers (5) über elastische Zwischenbereiche fest miteinander verbunden sind.

15. Spannfutter nach einem der Ansprüche 1 bis 14, **dadurch gekennzeichnet, daß** die Aufnahmeelemente in eine elastische Halterung aus insbesondere einem Kunststoffmaterial eingesetzt bzw. eingebettet und auf diese Weise miteinander zu einem Aufnahmekörper verbunden sind.

## Claims

1. Chuck with a chuck body (1) and clamping jaws displaceably arranged in radial guide grooves of the chuck body (1), wherein the chuck body (1) has a machine-side base body (2), **characterized in that** the chuck body (1) has a plurality of seat elements (6a, 6b, 6c), held on the base body (2), in which the guide grooves (10) for the clamping jaws (11) are formed, the seat elements (6a, 6b, 6c) being radially supported on the base body (2) by areas of contact (17), and carrying centrifugal force counterbalancing weights (15) which project beyond the areas of contact (17) towards the machine side.

2. Chuck according to Claim 1, **characterized in that** the seat elements (6a, 6b, 6c) are tiltable with respect to the base body (2) in a plane including the chuck axis and the longitudinal axis of the associated guide groove (10).

3. Chuck according to Claim 2, **characterized in that** the seat elements and the base body are connected to each other by articulated joints in the areas of contact.

4. Chuck according to Claim 3, **characterized in that** the articulated joints are formed in particular by contact faces in the form of a segment of a circle on the seat elements and base body.

5. Chuck according to any one of Claims 1 to 3, **characterized in that** the seat elements and base body are solidly connected in the areas of contact by solid hinges.

6. Chuck according to Claim 1, **characterized in that** the seat elements (6a, 6b, 6c) rest flatly on the base body (2) at their radially inner end.

7. Chuck according to Claim 6, **characterized in that** the seat elements (6a, 6b, 6c) rest flatly on the base body (2) in a plane perpendicular to the chuck axis and a radial limit stop (17) is formed on the base body (2).

8. Chuck according to Claim 6 or Claim 7, **characterized in that** the seat elements (6a, 6b, 6c) have a flexing zone (18) between the areas of contact (17) and the centrifugal force counterbalance weights (15) provided radially outside the latter.

9. Chuck according to any one of the preceding claims, **characterized in that** the centrifugal force counterbalance weights (15) are provided at the radially outer end region of the seat elements (6a, 6b, 6c).

10. Chuck according to Claim 9, **characterized in that** the centrifugal force counterbalance weights (15) are configured as cylindrical segments.

11. Chuck according to any one of the preceding claims, **characterized in that** mating stop faces are formed on the machine-side end of the centrifugal force counterbalance weights (15) and on the base body (2) to limit the radially outwards shift of the centrifugal force counterbalance weights.

12. Chuck according to any one of the preceding claims, **characterized in that** the centrifugal force counterbalance weights (15) are solidly connected to the seat elements (6a, 6b, 6c).

13. Chuck according to any one of Claims 1 to 11, **characterized in that** the centrifugal force counterbalance weights are provided axially displaceably on the seat elements.

14. Chuck according to any one of the preceding claims, **characterized in that** the seat elements (6a, 6b, 6c) are solidly connected to each other by elastic intermediate zones to form one seat body (5).

15. Chuck according to any one of Claims 1 to 14, **characterized in that** the seat elements are inserted and/or embedded in an elastic mounting in particular of plastic material and thus connected to each other to form one seat body.

## Revendications

1. Mandrin de serrage avec un corps de mandrin (1) et des griffes de serrage qui sont disposées de façon déplacable dans des rainures de guidage radiales du corps du mandrin (1); le corps de mandrin (1) présentant un corps de base (2) du côté de la machine, **caractérisé en ce que** le corps du mandrin (1) présente des éléments de réception (6a, 6b, 6c) maintenus sur le corps de base (2), dans lesquels sont formés les rainures de conduite (10) pour les griffes de serrage (11); les éléments de réception (6a, 6b, 6c) s'appuyant de façon radiale sur le corps de base (2) en formant des zones de contact (17) et portent des masses d'équilibrage à force centrifuge (15) qui font saillie par rapport au côté de la machine au dessus des zones de contact (17).

2. Mandrin de serrage selon la revendication 1, **caractérisé en ce que** les éléments de réception (6a, 6b, 6c) sont susceptibles d'être pivotés par rapport au corps de base (2) dans un plan incluant l'axe de mandrin et l'axe longitudinal de la rain ure de conduite (10) associé.

3. Mandrin de serrage selon la revendication 2, **caractérisé en ce que** les éléments de réception et le corps de base sont reliés l'un à l'autre dans les zones de contact par des articulations.

4. Mandrin de serrage selon la revendication 3, **caractérisé en ce que** les articulat ions sont formés par des surfaces de contact notamment en forme de tronçons circulaires, sur les éléments de réception et le corps de base.

5. Mandrin de serrage selon une des revendications 1 à 3, **caractérisé en ce que** les éléments de réception et le corps de base sont reliés fixement dans les zones de contact en formant des articulations solides.

6. Mandrin de serrage selon la revendication 1, **caractérisé en ce que** les éléments de réception (6a, 6b, 6c) sont appliqués de façon bidimensionnelle sur leur zone terminale intérieure radiale sur le corps de base.

7. Mandrin de serrage selon la revendication 6, **caractérisé en ce que** les éléments de réception (6a, 6b, 6c) s'appuient de façon bidimensionnelle dans un plan perpendiculaire par rapport à un axe de mandrin sur le corps de base (2) et forment sur le corps de base (2) une butée radiale (17).

8. Mandrin de serrage selon la revendication 6 ou 7, **caractérisé en ce que** les éléments de réception (6a, 6b, 6c) présentent une zone de pliage (18) entre les zones de contact (17) et les masses d'équilibrage à force centrifuge (15) prévues à l'extérieurs desdits éléments de réception de façon radiale.

9. Mandrin de serrage selon une des revendications précédentes, **caractérisé en ce que** les masses d'équilibrage à force centrifuge (15) sont prévues sur la zone terminale extérieure de façon radiale des éléments de réception (6a, 6b, 6c).

10. Mandrin de serrage selon la revendication 9, **caractérisé en ce que** les masses d'équilibrage à force centrifuge (15) ont la forme de tronçons cylindriques.

11. Mandrin de serrage selon une des revendications précédentes, **caractérisé en ce que** des surfaces de butée sont formées sur la zone terminale des masses d'équilibrage à force centrifuge (15) du côté de la machine et correspondant au corps de base (2) pour limiter le chemin de réglage des masses d'équilibrage à force centrifuge de façon radiale vers l'extérieur.

12. Mandrin de serrage selon une des revendications précédentes, **caractérisé en ce que** les masses d'équilibrage à force centrifuge (15) sont reliées de façon fixe avec les éléments de réception (6a, 6b, 6c).

13. Mandrin de serrage selon une des revendications 1 à 11, **caractérisé en ce que** les masses d'équilibrage à force centrifuge sont susceptibles d'être déplacés axialement sur les éléments de réception.

14. Mandrin de serrage selon une des revendications précédentes, **caractérisé en ce que** les éléments de serrage (6a, 6b, 6c) sont reliés l'un à l'autre fixement en formant un corps de réception (5), par des zones intermédiaires élastiques.

15. Mandrin de serrage selon une des revendications 1 à 14, **caractérisé en ce que** les éléments de réception sont introduits , respectivement logés dans un support élastique constitué notamment dans un matériau en plastique et reliés l'un à l'autre de cette manière à un corps de réception.
